# EUROPÄISCHE PATENTANMELDUNG

(11) **EP 2 394 603 A1**
(43) Veröffentlichungstag der Anmeldung: **14.12.2011**
(21) Anmeldenummer: 11004741.2
(22) Anmeldetag: 10.06.2011
(51) Int. Cl.: A61C 13/00, A61C 9/00

(54) **Verfahren und Datenvearbeitungsvorrichtung zum Bereitstellen von Geometriedaten von Zahn- und/oder Kieferbereichen**

(30) Priorität: 11.06.2010 DE 102010023406
(71) Anmelder: Hintersehr, Kevin, 64347 Griesheim (DE)
(72) Erfinder: Hintersehr, Kevin, 64347 Griesheim (DE)
(74) Vertreter: Bill, Burkart Hartmut

(57) **Zusammenfassung**

Die Erfindung betrifft ein Verfahren zum Bereitstellen von Geometriedaten wenigstens eines Zahn- und/oder Kieferbereiches, umfassend die folgenden Schritte: Optisches Erfassen des wenigstens einen Zahn- und/oder Kieferbereiches mit wenigstens zwei Einzelaufnahmen aus wenigstens zwei unterschiedlichen Blickwinkeln; Berechnen einer Anzahl von Koordinatendaten für eine entsprechende Anzahl von Messpunkten einer jeweiligen Einzelaufnahme; und Berechnen von Geometriedaten für den wenigstens einen Zahn- und/oder Kieferbereich unter Berücksichtigung der für die Einzelaufnahmen berechneten Koordinatendaten sowie wenigstens eines zusätzlichen, hinsichtlich des wenigstens einen Zahn- und/oder Kieferbereiches erfassten oder bereitgestellten Datums. Ferner betrifft die Erfindung eine Datenverarbeitungsvorrichtung zum Bereitstellen von Geometriedaten wenigstens eines Zahn- und/oder Kieferbereiches.

## Beschreibung

Die Erfindung betrifft ein Verfahren zum Bereitstellen von Geometriedaten von Zahn- und/oder Kieferbereichen, insbesondere unter Einbeziehung von optisch und/oder intraoral erfassten Daten.

Im Bereich der modernen Dentalmedizin bzw. Dentaltechnik sind Intra- oder extraorale Scann- bzw. Messverfahren sowie anschließende Digitalisierungsverfahren zur Verarbeitung der erfassten Scann- bzw. Messdaten von Zahn- und/oder Kieferbereichen durch wenigstens eine Datenverarbeitungseinrichtung bekannt, um insbesondere dreidimensionale Geometriedaten von Zahn- und/oder Kieferbereichen, beispielsweise von Einzelzähnen oder kompletten Zahnbögen, zu erhalten, die als Grundlage für eine Vielzahl möglicher nachfolgender Verfahren, etwa zur Fertigung von Dentalkomponenten bzw. zahntechnischen Restaurationen, wie Implantaten, Zahnaufbauten, Zahnkronen, Zahnbrücken oder Zahnbrückengerüsten, dienen können, wobei zum Beispiel im Vorfeld der Fertigung aus den Geometriedaten auch CAD-Modelle (CAD: computer aided design) generierbar sind.

Bei extraoralen Verfahren erfolgt das Scannen bzw. Vermessen von Zahn- und/oder Kieferbereichen an einem zunächst aus einem Abdruck des Gebisses bzw. Kiefers gewonnnen Gipsmodell. Dadurch ist zwar der eigentliche Scann- bzw. Vermessungsvorgang auf einfachere Weise als bei intraoralen Verfahren durchführbar, allerdings erfordert die Herstellung eines Gipsmodells zunächst zusätzliche Verfahrensschritte und das Gipsmodell besitzt in der Regel bereits Ungenauigkeiten, zumindest aber eine veränderte, insbesondere kleinere Größe gegenüber dem realen Objekt. Bei intraoralen Verfahren, die zumindest teilweise unmittelbar im Mund, zum Beispiel an einem Einzelzahn, einer Gruppe von Zähnen oder einem kompletten Zahnbogen erfolgen, wird zur Erfassung von Scann- bzw. Messdaten von Zahn- und/oder Kieferbereichen beispielsweise ein im Oralbereich geführtes Scanngerät, das häufig stiftartig und bevorzugt mit einem optischen Scannmodul ausgebildet ist, eingesetzt. Eine' vorhergehende Abformung des Gebisses bzw. Kiefers ist somit nicht erforderlich und ermöglicht die Eliminierung von Abdruckfehlern. Allerdings muss das zum Scannen bzw. Vermessen eingesetzte Gerät eine kompakte Bauweise besitzen, und sollte den zu untersuchenden Zahn- und/oder Kieferbereich mit möglichst wenigen Einzelaufnahmen in möglichst kurzer Zeit von beispielsweise 20 bis 300 Millisekunden, bevorzugter Weise weniger als 200 Millisekunden, je Einzelaufnahme erfassen können, damit die Aufnahme nicht etwa durch ein Wackeln oder Zittern des

Patienten verfälscht bzw. unscharf wird.

Das optische Scannen bzw. Vermessen von Zahn- und/oder Kieferbereichen zum Bereitstellen eines Satzes von Geometriedaten basiert sowohl bei intra- als auch extraoralen Verfahren im Wesentlichen auf den an sich bekannten Verfahren der Streifenprojektion und der Rundumvermessung.

Beim Streifenprojektionsverfahren kommen zur dreidimensionalen Erfassung von Objektoberflächen im Allgemeinen insbesondere wenigstens ein Musterprojektor zur Beleuchtung des Messobjektes mit hellen und dunklen Streifen und wenigstens eine Kamera zur Aufnahme des Messobjektes mit dem aufprojizierten Streifenmuster aus wenigstens einem Blickwinkel zum Einsatz.

Als Rundumvermessung kann im Wesentlichen jede Vermessung verstanden werden, die ein Objekt oder einen Objektbereich aus mehreren Blickwinkeln analysiert/untersucht. Hierzu gehört neben der 360°-Vollraumvermessung somit zum Beispiel auch die 180°-Halbraumvermessung. Für Anwendungen im Dentalbereich ist es in der Regel ausreichend 240°-Vermessungen vorzunehmen, mit denen zum Beispiel ein Zahn ohne dessen Wurzel erfasst werden kann, wozu jedoch wenigstens zwei Einzelaufnahamen aus einem jeweils unterschiedlichen Blickwinkel erforderlich sind.

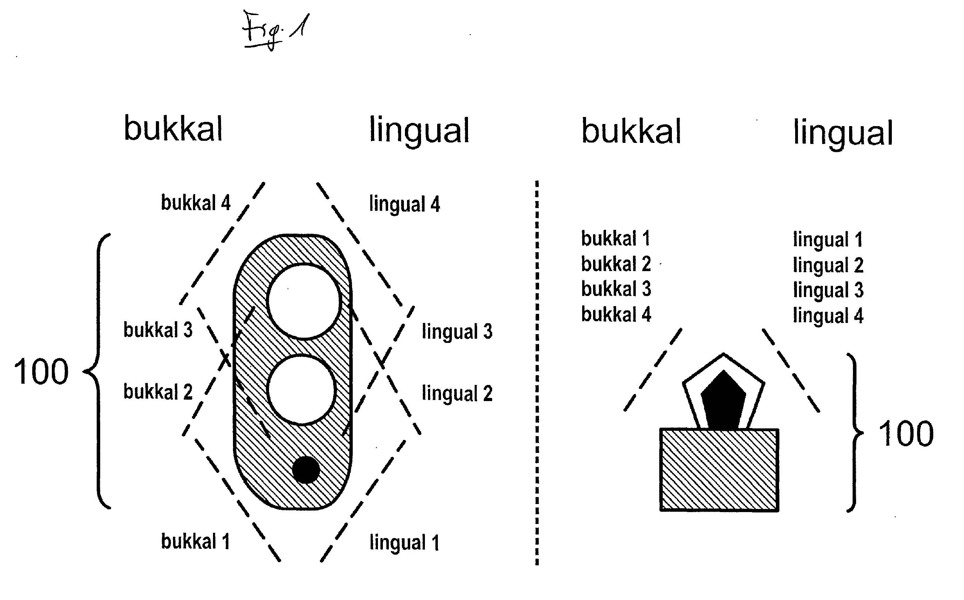

Die Figur 1 zeigt beispielhaft ein Aufnahmeschema für einen Zahn- und Kieferbereich, der mit insgesamt acht Einzelaufnahmen erfasst wird, wobei bukkal und lingual jeweils vier Einzelaufnahmen aus unterschiedlichen Blickwinkeln gemacht werden. Hierzu muss von Aufnahme zu Aufnahme bei intraoralen Verfahren die Position des Scanngeräts und bei extraoralen Verfahren die Position des Scanngeräts oder des Gipsmodells entsprechend verändert werden. Grundsätzlich ist die Anzahl der erforderlichen Einzelaufnahmen jedoch abhängig von der Größe und Form des zu erfassenden bzw. vermessenden Zahn- und/oder Kieferbereichs.

Da die Verfahren der Streifenprojektion und der Rundumvermessung an und für sich für den Fachmann auf diesem Gebiet bekannt sind, wird hierauf im Folgenden nur noch insoweit eingegangen, wie es zum Verständnis und zur Nachvollziehbarkeit der vorliegenden Erfindung erforderlich ist.

Für intra- aber auch für extraoral erfasste Einzelaufnahmen eines Zahn- und/oder Kieferbereichs wird dann beispielsweise durch wenigstens ein dem optischen Scannmodul nachgeschaltetes und entsprechend ausgebildetes Datenverarbeitungsmodul jeweils eine Anzahl von Koordinatentripel entsprechend einer Anzahl von Messpunkten und ferner aus den Koordinatentripel mehrerer Einzelaufnahmen ein Satz von Geometriedaten für den gesamten gescannten Zahn- und/oder Kieferbereich berechnet (sogenanntes Matching oder Merging). Anschließend kann gegebenenfalls durch ein entsprechend angepasstes Datenverarbeitungsmodul ein dreidimensionales CAD-Modell des gescannten bzw. vermessenen Zahn- und/oder Kieferbereichs aus dem Satz von Geometriedaten generiert werden. Es versteht sich dabei, dass ein solches Datenverarbeitungsmodul Hardware und/oder Software umfassen kann.

Bei optisch erfassten Scann- bzw. Messdaten von Zahn- und/oder Kieferbereichen kann es problematischer Weise vorkommen, dass der auf diesen Daten basierend berechnete Satz an Geometriedaten insbesondere hinsichtlich der Zahn- bzw. Kiefermaße sowie der Zahnabstände und/oder -stellungen zueinander nicht ausreichend realitätsgetreu ist und also den erfassten realen Zahn- und/oder Kieferbereich nicht korrekt wiedergibt, vor allem wenn die Geometriedaten mehrere Zähne oder einen kompletten Zahnbogen betreffen und somit aus den Koordinatentripel einer Vielzahl von Einzelaufnahmen berechnet wurden. Ungenauigkeiten ergeben sich vor allem beim Zusammenführen (engl.: Matching oder auch Merging) mehrerer Einzelaufnahmen entlang der Kurve des Zahnbogens.

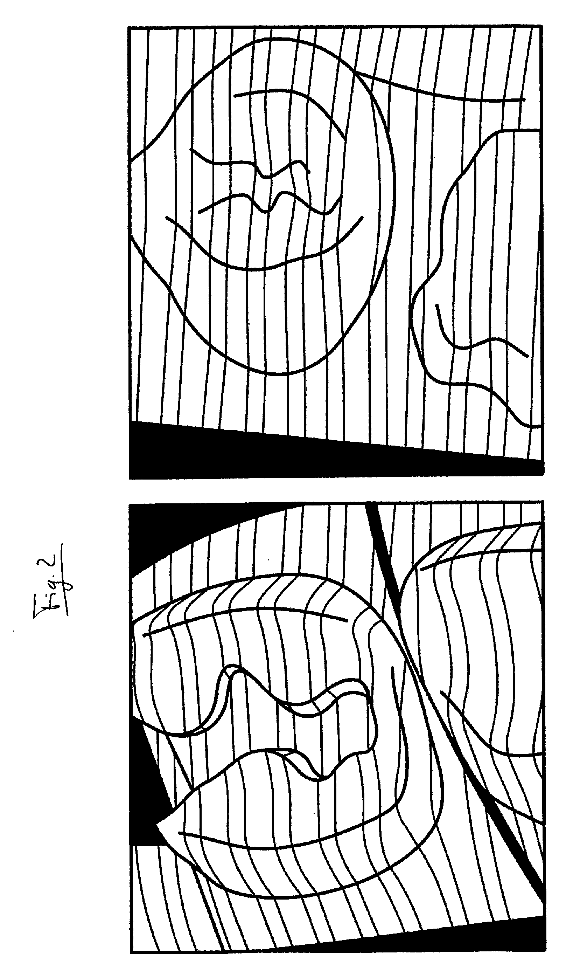

Ein zusätzliches Problem ergibt sich insbesondere beim intraoralen, optischen Erfassen von Scann- bzw. Messdaten aufgrund der glatten Obenfläche und des daraus resultierenden höheren Glanzes von Echtzähnen gegenüber einem Gipsmodell. Durch die am Echtzahn auftretenden Reflexionen kann zum Beispiel das Licht der Musterprojektoreinheit des Scannmoduls nicht ausreichend in die Vertiefungen der Zahnoberfläche eindringen, so dass das auf den Zahn projizierte Streifenmuster teilweise sehr blass und/oder verschwommen ausgeprägt ist, was zu entsprechend ungenauen oder fehlenden Koordinatentripel führt. Die Figur 2 zeigt auf der linken Seite ein auf ein Gipsmodell projiziertes Streifenmuster, während auf der rechten Seite ein auf einen Echtzahn projiziertes Streifenmuster dargestellt ist. Zur Verminderung des Problems des Glanzes von Echtzähnen sieht ein bisher bekannter Ansatz vor, die zu vermessenden Zähne zunächst mit einem glanzhemmenden Pulver zu beschichten. Dies kann jedoch noch nicht als eine zufriedenstellende Lösung betrachtet werden.

Eine Aufgabe der Erfindung ist es daher, ein verbessertes Verfahren zum Bereitstellen von Geometriedaten von Zahn- und/oder Kieferbereichen insbesondere unter Einbeziehung von optisch und/oder intraoral erfassten Daten zur Verfügung zu stellen.

Die Erfindung löst die Aufgabe überraschender Weise bereits durch Gegenstände mit den Merkmalen gemäß den unabhängigen, Ansprüchen. Die jeweiligen Unteransprüche betreffen bevorzugte und/oder vorteilhafte Weiterbildungen.

Die Erfindung schlägt demnach zur Lösung der genannten Aufgabe zum einen ein Verfahren zum Bereitstellen von Geometriedaten wenigstens eines Zahn- und/oder Kieferbereiches vor, welches die folgenden Schritte umfasst:
- Optisches Erfassen des wenigstens einen Zahn- und/oder Kieferbereiches mit wenigstens zwei Einzelaufnahmen aus wenigstens zwei unterschiedlichen Blickwinkeln;
- Berechnen einer Anzahl von Koordinatendaten für eine entsprechende Anzahl von Messpunkten einer jeweiligen Einzelaufnahme; und
- Berechnen von Geometriedaten für den wenigstens einen Zahn- und/oder Kieferbereich unter Berücksichtigung der für die Einzelaufnahmen berechneten Koordinatendaten sowie wenigstens eines zusätzlichen, hinsichtlich des wenigstens einen Zahn- und/oder Kieferbereiches erfassten oder bereitgestellten Datums oder wenigstens einer zusätzlichen, hinsichtlich des wenigstens einen Zahn- und/oder Kieferbereiches erfassten oder bereitgestellten Information.

Ferner ist erfindungsgemäß eine Datenverarbeitungsvorrichtung zum Bereitstellen von Geometriedaten wenigstens eines Zahn- und/oder Kieferbereiches vorgesehen. Diese ist dadurch gekennzeichnet, dass sie Mittel umfasst zum Berechnen der Geometriedaten unter Berücksichtigung einer bereitgestellten Anzahl von Koordinatendaten dieses wenigstens eines Zahn- und/oder Kieferbereiches sowie wenigstens eines hinsichtlich des wenigstens einen Zahn- und/oder Kieferbereiches zusätzlich bereitgestellten Datums oder wenigstens einer hinsichtlich des wenigstens einen Zahn- und/oder Kieferbereiches zusätzlich bereitgestellten Information.

Bei dem wenigstens einen zusätzlichen Datum bzw. der wenigstens einen zusätzlichen Information kommt es im Wesentlichen nicht darauf an, wann oder wie es bzw. sie erfasst oder ermittelt wurde, sondern vielmehr darauf, dass ein Datum bzw. eine Information bereitsteht, das bzw. die während des herkömmlichen optischen Erfassens des wenigstens einen Zahn- und/oder Kieferbereiches noch nicht gewonnen werden kann bzw. konnte.

Hieraus ergibt sich bereits der wesentliche Vorteil der gesteigerten Realitätstreue der für den wenigstens einen Zahn- und/oder Kieferbereich berechneten Geometriedaten, denn die Geometriedaten werden nunmehr nicht nur auf Basis der für die Einzelaufnahmen berechneten Koordinatendaten berechnet, sondern wenigstens ein weiteres Datum bzw. eine weitere Information fließt in die Berechnung der Geometriedaten für den wenigstens einen Zahn- und/oder Kieferbereich mit ein. Es versteht sich dabei, dass sich die Realitätstreue der Geometriedaten zunehmend verbessert, je mehr zusätzliche Informationen hinsichtlich des wenigstens einen Zahn- und/oder Kieferbereiches bereitstehen.

Bevorzugt ist die Datenverarbeitungsvorrichtung ferner dadurch gekennzeichnet, dass sie Mittel umfasst zum Berechnen einer Anzahl von Koordinatendaten für eine entsprechende Anzahl von Messpunkten einer jeweiligen von wenigstens zwei bereitgestellten Einzelaufnahmen, mit denen der Zahn- und/oder Kieferbereich aus wenigstens zwei unterschiedlichen Blickwinkeln erfasst wurde.

Bevorzugt ist bei dem Verfahren vorgesehen, dass es sich bei dem wenigstens einen zusätzlichen Datum um eine Anzahl von wenigstens zwei Koordinatendaten für eine entsprechende Anzahl von besonderen Messpunkten handelt, die durch wenigstens ein im Wesentlichen festes, streifenförmiges Materialstück definiert sind, das zwei voneinander beabstandete Stellen des wenigstens einen Zahn- und/oder Kieferbereiches verbindet, indem es lösbar, jedoch verrutschungssicher auf diese Stellen aufgebracht ist und den Abstand zwischen diesen Stellen überbrückt. Es versteht sich, dass ein solches Materialstück ebenfalls mit einer Anzahl von Einzelaufnahmen optisch erfasst wird.

Durch dieses überbrückende, streifenförmige Materialstück kann zum Beispiel ein ansonsten zur Rachenseite hin offener Zahnbogen gewissermaßen zu einem Kreis geschlossen werden, was das Zusammenführen (engl.: Matching oder auch Merging) der erfassten Einzelaufnahmen bzw. der berechneten Koordinatendaten während des Schrittes des Berechnens der Geometriedaten für den wenigstens einen Zahn- und/oder Kieferbereich erheblich erleichtert.

Zusätzlich erleichtert wird ein solches Zusammenführen, wenn sich bevorzugter Weise auf dem Materialstück zwischen dessen Enden wenigstens eine weitere Markierung befindet, die einen weiteren besonderen Messpunkt definiert.

Bevorzugt ist ergänzend oder alternativ vorgesehen, dass es sich bei dem wenigstens einen zusätzlichen Datum um eine Anzahl von wenigstens zwei Koordinatendaten für eine entsprechende Anzahl von besonderen Messpunkten handelt, die durch wenigstens zwei Markierungen definiert sind, die auf wenigstens zwei voneinander beabstandeten Stellen des wenigstens einen Zahn- und/oder Kieferbereiches lösbar, jedoch verrutschungssicher aufgebracht sind.

Besonders bevorzugt handelt es sich bei dem wenigstens einen zusätzlichen Datum ferner um den Abstand zwischen den besonderen Messpunkten, die durch die wenigstens zwei Markierungen definiert sind.

Da durch das wenigstes eine aufgebrachte streifenförmige Materialstück oder durch die wenigstens zwei aufgebrachten Markierungen bestimmte Zahn- und/oder Kieferstellen verdeckt werden, ist bevorzugt vorgesehen, ebendiese Zahn- und/oder Kieferstellen auch vor dem Aufbringen oder nach dem Entfernen des Materialstücks bzw. der Markierungen mit einer Anzahl von Einzelaufnahmen zu erfassen. Dadurch kann gewährleistet werden, dass auch Geometriedaten des wenigstens einen Zahn- und/oder Kieferbereichs berechenbar sind, aus denen solche Stellen auch im unverdeckten Zustand, also ohne ein aufgebrachtes Materialstück oder eine aufgebrachte Markierung, erkennbar sind.

Bevorzugt ist ergänzend oder alternativ vorgesehen, dass es sich bei dem wenigstens einen zusätzlichen Datum um den Abstand zwischen wenigstens zwei besonderen Messpunkten handelt, die durch natürlich vorhandene markante Stellen des Kiefers oder markante Zahnstellen, insbesondere Zahnhöcker oder Zahnfissuren, definiert sind, die Teil des wenigstens einen Zahn- und/oder Kieferbereiches sind.

Zweckmäßiger Weise sollten die Stellen derart gewählt werden, dass sie möglichst weit voneinander beabstandet sind und insbesondere in unterschiedlichen Gebissquadranten des wenigstens einen Zahn- bzw. Kieferbereiches liegen. Dem Fachmann auf diesem Gebiet wird bekannt sein, dass ein Gebiss gemäß dem FDI-Schema (FDI: Fédération Dentaire Internationale) in die vier Quadranten oben rechts, oben links, unten links und unten recht unterteilbar ist. Beispielsweise sollten die Stellen auf zwei Backenzähnen, bevorzugt den hinteren Backenzähnen, gegenüberliegender Quadranten eines Kiefers liegen.

Die Datenverarbeitungsvorrichtung umfasst bevorzugt Mittel zum Generieren eines den wenigstens einen Zahn- und/oder Kieferbereich repräsentierenden grafischen Modells, insbesondere eines dreidimensionalen graphischen Modells, basierend auf den berechneten Geometriedaten sowie bevorzugt Mittel zum Anzeigen dieses grafischen Modells an einer geeigneten mit der Datenverarbeitungsvorrichtung verbundenen Mensch-Maschine-Schnittstelle, insbesondere einem Monitor.

Die erwähnten Abstände zwischen den besonderen Messpunkten können zum Beispiel auf einfache Weise mit Hilfe eines Messschiebers ermittelt werden. Der jeweils ermittelte Abstandswert kann dann für die Berechnung der Geometriedaten bereitgestellt werden, indem er beispielsweise über eine mit der Datenverarbeitungsvorrichtung verbundene Mensch-Maschine-Schnittstelle zur Dateneingabe, insbesondere eine Tastatur und/oder eine Computermaus, eingegeben wird. Hierzu können zweckmäßiger Weise die wenigstens zwei besonderen Messpunkte, zwischen denen ein Abstand ermittelt wurde, über die Mensch-Maschine-Schnittstelle zur Datenausgabe, insbesondere einen Monitor, an der das von der Datenverarbeitungsvorrichtung generierte grafische Modell angezeigt wird, und gegebenenfalls über eine mit der Datenverarbeitungseinrichtung verbundene Mensch-Maschine-Schnittstelle zur Dateneingabe, insbesondere eine Tastatur und/oder Computermaus, ausgewählt und dann der ermittelte Abstandswert eingegeben werden. Dabei besitzen die besonderen Messpunkte, die durch Markierungen definiert sind, gegenüber den besonderen Messpunkten, die durch natürlich vorhandene markante Stellen des Kiefers oder markante Zahnstellen definiert sind, den Vorteil, dass die besonders einfach auswählbar sind.

Die Datenverarbeitungsvorrichtung umfasst bevorzugt Mittel zum Anpassen der berechneten Geometriedaten sowie bevorzugt Mittel zum Anpassen des generierten grafischen Modells unter Berücksichtigung des wenigstens einen als zusätzliches Datum eingegebenen Abstandswertes zwischen zwei ausgewählten besonderen Messpunkten, sofern der sich aus den berechneten Geometriedaten ergebende Abstandswert zwischen den zwei ausgewählten besonderen Messpunkten von dem eingegebenen Abstandswert unterscheidet.

Bevorzugt ist ergänzend oder alternativ vorgesehen, dass es sich bei dem wenigstens einen zusätzlichen Datum um eine Anzahl von Koordinatendaten für eine entsprechende Anzahl von besonderen Messpunkten handelt, die durch wenigstens einen Bisskontaktpunkt definiert sind, der zwischen Stellen, insbesondere Zahnstellen, auftritt, die Teil des wenigstens einen Zahn- und/oder Kieferbereiches sind.

Besonders bevorzugt wird bzw. wurde die Anzahl von Koordinatendaten mit Hilfe eines elektronisch erfassten und ausgewerteten Gebissabdrucks ermittelt. Besonders bevorzugt sind die Bisskontaktpunkte Frühkontaktpunkte.

Solche Bisskontaktpunkte treten somit in der Regel an natürlich vorhandenen markanten Stellen des Kiefers oder markante Zahnstellen, insbesondere Zahnhöckern, auf, die Teil des wenigstens einen Zahn- und/oder Kieferbereiches sind. Für besondere Messpunkte, die durch solche markanten Stellen definiert sind, liegen dann, sofern sie mit Hilfe eines elektronisch erfassten und ausgewerteten Gebissabdrucks ermittelt wurden, welcher mit einem elektronischen Bissanalysegeräts durchgeführt werden kann, jeweils Koordinatendaten vor, die als wenigstens ein zusätzliches Datum für die Berechnung der Geometriedaten bereitgestellt werden können, indem sie beispielsweise über eine mit der Datenverarbeitungsvorrichtung verbundene Mensch-Maschine-Schnittstelle zur Dateneingabe, insbesondere eine Tastatur und/oder Computermaus, eingegeben werden. Hierzu kann zweckmäßiger Weise der jeweilige besondere Messpunkt, zudem Koordinatendaten ermittelt wurden, über die Mensch-Maschine-Schnittstelle zur Datenausgabe, insbesondere einen Monitor, an der das von der Datenverarbeitungsvorrichtung generierte grafische Modell angezeigt wird, und gegebenenfalls über eine mit der Datenverarbeitungseinrichtung verbundene Mensch-Maschine-Schnittstelle zur Dateneingabe, insbesondere eine Tastatur und/oder Computermaus, ausgewählt und dann die ermittelten Koordinatendaten eingegeben werden.

Die Datenverarbeitungsvorrichtung umfasst bevorzugt Mittel zum Anpassen der berechneten Geometriedaten sowie bevorzugt Mittel zum Anpassen des generierten grafischen Modells unter Berücksichtigung der als wenigstens ein zusätzliches Datum eingegebenen Koordinatendaten eines ausgewählten besonderen Messpunktes, sofern die sich aus den berechneten Geometriedaten ergebenden Koordinatendaten für den ausgewählten besonderen Messpunkt von den eingegebenen Koordinatendaten unterscheiden.

Anwendungsspezifisch wird der Schritt des optischen Erfassens des wenigstens einen Zahn- und/oder Kieferbereiches zweckmäßiger Weise intraoral und/oder extraoral durchgeführt. Für das intraorale Erfassen ergibt sich erfindungsgemäß der Vorteil, dass trotz aufgrund von Reflexionen an glatten und glänzenden Echtzahnobenflächen fehlender oder fehlerhafter Koordinatendaten, die Realitätstreue der berechneten Geometriedaten aufgrund des Einbeziehens wenigstens eines zusätzlichen Datums zumindest ausreichend hoch ist. Ein Beschichten von Zähnen mit einem glanzhemmenden Pulver ist daher weitestgehend nicht mehr erforderlich.

Anwendungsspezifisch werden während des Schrittes des Berechnens einer Anzahl von Koordinatendaten zweckmäßiger Weise als Koordinatendaten Koordinatentripel berechnet, welche jeweils Daten für die X-, Y- und Z-Achse, das heißt dreidimensionale Koordinatendaten, umfassen.

Anwendungsspezifisch werden während des Schrittes des Berechnens von Geometriedaten zweckmäßiger Weise dreidimensionale Geometriedaten berechnet, welche jeweils Daten für die X-, Y- und Z-Achse umfassen.

Diese und weitere Merkmale und Vorteile der Erfindung werden nachfolgend anhand bevorzugter Ausführungsbeispiele unter Bezugnahme auf die beigefügten Figuren näher beschrieben. Es zeigen die
- Figur 1: beispielhaft ein Aufnahmeschema für einen Zahnund Kieferbereich, der mit insgesamt acht Einzelaufnahmen erfasst wird, wobei bukkal und lingual jeweils vier Einzelaufnahmen aus unterschiedlichen Blickwinkeln gemacht werden;
- Figur 2: auf der linken Seite die beispielhafte Darstellung eines Streifenmusters auf einem Gipsmodell, und auf der rechten Seite die beispielhafte Darstellung eines Streifenmusters auf einem Echtzahn;
- Figur 3: beispielhaft einen kompletten Zahnbogen mit drei lösbar jedoch verrutschungssicher aufgebrachten Markierungen, die jeweils besondere Messpunkte definieren;
- Figur 4: in drei Darstellungen ein Gerät zur elektronischen Bissanalyse, einen mit einem solchen Gerät elektronisch erfassten und ausgewerteten Gebissabdruck mit den jeweiligen Bisskontaktpunkten, sowie die an den jeweiligen Bisskontaktpunkten wirkenden Kräfte;
- Figur 5: beispielhaft einen kompletten Zahnbogen mit einem im Wesentlichen festen, streifenförmigen Materialstück, das zwei voneinander beabstandete Stellen des Zahn- und Kieferbereichs verbindet, indem es lösbar aber verrutschungssicher auf diese Stellen aufgebracht ist, und das eine Anzahl von besonderen Messpunkten definiert.

Die Figur 1 zeigt, wie eingangs bereits erwähnt, beispielhaft ein Aufnahmeschema für einen Zahn- und Kieferbereich 100, der mit insgesamt acht Einzelaufnahmen erfasst wird. Dabei werden bukkal, also backenseitig, und lingual, also zungenseitig, jeweils vier Einzelaufnahmen aus unterschiedlichen Blickwinkeln gemacht, die mit bukkal 1 bis bukkal 4 bzw. lingual 1 bis lingual 4 gekennzeichnet sind. Der linke Teil der Figur 1 zeigt das Aufnahmeschema in eine Aufsicht auf den zu erfassenden Zahn- und Kieferbereich 100, während der rechte Teil der Figur 1 das Aufnahmeschema in einer Seitenansicht auf den zu erfassenden Zahn- und Kieferbereich 100 zeigt.

Bei einem intraoralen Verfahren wird ein in der Figur nicht dargestelltes Scanngerät beispielsweise per Hand im Mundraum geführt und nacheinander in die jeweils erforderlichen Positionen gebracht, damit die jeweiligen Einzelaufnahmen bukkal 1 bis bukkal 4 sowie lingual 1 bis lingual 4 aus den unterschiedlichen Blickwinkeln gemacht werden können.

Bevorzugter Weise steht das Scanngerät mit einer in der Figur ebenfalls nicht dargestellten Anzeigeeinrichtung in Verbindung, auf der sowohl die wenigstens eine zuletzt gemachte Einzelaufnahme sowie das vom Scanngerät aktuell erfasste Bild, d.h. der aktuell erfasste Ausschnitt des Zahn- und Kieferbereichs, übereinander geblendet angezeigt werden. Dadurch hat die Person, die das Scanngerät per Hand im Mundraum führt, auf einfache Weise die Möglichkeit, die Position des Scanngeräts zu kontrollieren und das Scanngerät derart zu positionieren, dass das aktuell erfasste Bild und wenigstens eine der bereits gemachten Einzelaufnahmen sich teilweise überlappen, was für das spätere Zusammenführen der Einzelaufnahmen bzw. der für die Einzelaufnahmen berechneten Koordinatendaten von Bedeutung ist.

Die Figur 2 zeigt, wie ebenfalls bereits eingangs erwähnt, im linken Teil die beispielhafte Darstellung eines auf ein Gipsmodell projizierten Streifenmusters, und im rechte Teil der Figur die beispielhafte Darstellung eines auf einen Echtzahn projizierten Streifenmusters. Aus den Darstellungen wird der aus der glatten Oberfläche des Echtzahns resultierende höhere Glanz gegenüber dem Gipsmodell deutlich. Aufgrund der durch die glatte Oberfläche und den Glanz bedingten Reflexionen kann das Licht der in der Figur 2 nicht dargestellten Musterprojektoreinheit des Scannmoduls des Scanngeräts nicht ausreichend in die Vertiefungen der Zahnoberfläche eindringen, so dass das auf den Zahn projizierte Streifenmuster teilweise sehr blass und/oder verschwommen ausgeprägt ist, was bei bisher bekannten Verfahren zu entsprechend ungenauen oder fehlenden Koordinatentripel führt, sofern die zu vermessenden Zähne nicht mit einem glanzhemmenden Pulver zu beschichten werden.

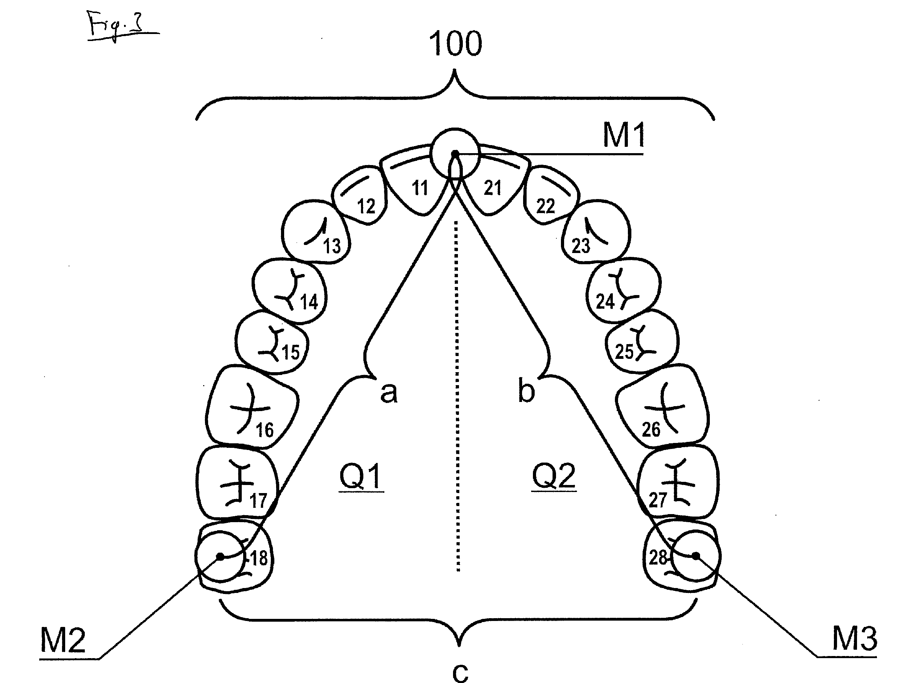

Die Figur 3 zeigt beispielhaft einen einen kompletten Zahnbogen umfassenden Zahn- und Kieferbereich 100. Bei dem dargestellten Zahnbogen handelt es sich um den eines Oberkiefers, so dass in der Figur links der gepunkteten Linie der erste Quadrant Q1 und rechts der gepunkteten Linie der zweite Quadrant Q2 zu sehen ist. Selbstverständlich hätte alternativ oder ergänzend auch der Zahnbogen eines Unterkiefers dargestellt sein können. Für die Nachvollziehbar der Erfindung ist es nicht relevant, ob sie anhand eines Ober- oder eines Unterkiefers erläutert wird.

Der Figur 3 ist ferner zu entnehmen, dass drei Markierungen M1, M2 und M3 auf Stellen des Zahnbereichs 100 lösbar jedoch verrutschungssicher aufgebracht sind und somit drei besondere Messpunkte definieren.

Das Verfahren zum Bereitstellen von Geometriedaten wenigstens für den Zahn- und/oder Kieferbereich 100 wird nun zunächst in einer bevorzugten Ausführungsform, bei der diese Markierungen zum Einsatz kommen, beschrieben. Zunächst wird der Zahn- und Kieferbereich 100 mit einer Vielzahl von Einzelaufnahmen aus unterschiedlichen Blickwinkeln optisch erfasst. Das optische Erfassen kann intraoral oder teilweise oder ausschließlich extraoral erfolgen. Für das extraorale Erfassen ist jedoch vorher nach bekannte Art und Weise ein Modell, in der Regel ein Gipsmodell, des Zahn- und Kieferbereich 100 herzustellen, von dem dann eine Anzahl von Einzelaufnahmen extraoral gemacht werden kann.

In einem weiteren Schritt wird eine Anzahl von Koordinatendaten für eine entsprechende Anzahl von Messpunkten einer jeweiligen Einzelaufnahme berechnet. Bevorzugt handelt es sich bei den für einen jeweiligen Messpunkt berechneten Koordinatendaten um Koordinatentripel, die jeweils Daten für die X-, Y- und Z-Koordinate eines Messpunktes umfassen.

In einem weiteren Schritt wird ein Satz von Geometriedaten, zweckmäßiger weise von dreidimensionalen Geometriedaten, für den Zahn- und Kieferbereich 100 berechnet, und zwar zum einen unter Berücksichtigung der für die Einzelaufnahmen berechneten Koordinatendaten. Zum anderen wird bei dieser Berechnung aber auch wenigstens ein zusätzliches, hinsichtlich des Zahn- und/oder Kieferbereiches 100 erfasstes oder bereitgestelltes Datum berücksichtigt.

Gemäß der in Figur 3 gezeigten Ausführungsform handelt es sich bei dem wenigstens einen zusätzlichen Datum um drei Koordinatendaten für die drei besonderen Messpunkte, welche durch die Markierungen M1, M2 und M3 definiert sind. Die Markierungen M2 und M3 sind lösbar aber verrutschungssicher auf die hinteren Backenzähne 18 und 28 aufgebracht, das heißt zum Beispiel aufgeklebt, wobei der Backenzahn 18 im ersten Quadranten Q1 und er Backenzahn 28 im zweiten Quadranten Q2 liegt. Die Markierung M1 ist zwischen den Schneidezähnen 11 und 21 und damit im Wesentlichen auf der Grenze zwischen dem ersten und zweiten Quadranten, aufgebracht. Somit bilden die drei Markierungen ein Dreieck.

Diese Markierungen werden während des Schrittes des optischen Erfassens des Zahn- und Kieferbereiches 100 ebenfalls mit erfasst, so dass für die durch diese Markierungen definierten besonderen Messpunkte während des Schrittes des Berechnens von Koordinatendaten ebenfalls Koordinatendaten berechnet werden.

Da durch die aufgebrachten Markierungen M1, M2 und M3 die darunterliegenden Zahnstellen und teils auch Kieferstellen verdeckt werden, werden zweckmäßiger Weise ebendiese Zahn- und Kieferstellen auch vor dem Aufbringen oder nach dem Entfernen der Markierungen mit einer Anzahl von Einzelaufnahmen erfasst. Dadurch kann gewährleistet werden, dass auch Koordinaten sowie Geometriedaten des Zahn- und Kieferbereichs 100 berechenbar sind, aus denen diese Stellen auch im unverdeckten Zustand, also ohne eines der aufgebrachten Materialstücke, erkennbar sind.

Erfindungsgemäß ist auch eine in den Figuren 1 bis 5 nicht dargestellte Datenverarbeitungsvorrichtung zum Bereitstellen von Geometriedaten wenigstens eines Zahn- und/oder Kieferbereiches vorgesehen. Diese zeichnet sich dadurch aus, dass sie Mittel umfasst zum Berechnen der Geometriedaten, zweckmäßiger Weise von dreidimensionalen Geometriedaten, unter Berücksichtigung einer bereitgestellten Anzahl von Koordinatendaten des Zahn- und Kieferbereiches 100 sowie wenigstens eines hinsichtlich des wenigstens des Zahn- und Kieferbereiches 100 zusätzlich bereitgestellten Datums.

Bevorzugt umfasst die Datenverarbeitungsvorrichtung ferner Mittel zum Berechnen einer Anzahl von Koordinatendaten für eine entsprechende Anzahl von Messpunkten einer jeweiligen von mehreren bereitgestellten Einzelaufnahmen, mit denen der Zahn- und Kieferbereich 100 aus mehreren unterschiedlichen Blickwinkeln erfasst wurde.

Die Datenverarbeitungsvorrichtung umfasst bevorzugt auch Mittel zum Generieren eines den Zahn- und Kieferbereich 100 repräsentierenden grafischen Modells, insbesondere eines dreidimensionalen graphischen Modells, basierend auf den berechneten Geometriedaten. Ferner umfasst die Datenverarbeitungsvorrichtung bevorzugt Mittel zum Anzeigen dieses grafischen Modells an einer geeigneten mit der Datenverarbeitungsvorrichtung verbundenen Mensch-Maschine-Schnittstelle, etwa einem Monitor.

Neben den drei Koordinatendaten für die drei besonderen Messpunkte, welche durch die Markierungen M1, M2 und M3 definiert sind, werden gemäß Figur 3 auch drei Abstandswerte a, b und c als zusätzliche Daten für die Berechnung der Geometriedaten bereitgestellt. Dabei entspricht der Abstandswert a dem Abstand zwischen den durch die Markierungen M1 und M2 definierten besonderen Messpunkten, der Abstandswert b dem Abstand zwischen den durch die Markierungen M1 und M3 definierten besonderen Messpunkten und der Abstandswert c dem Abstand zwischen den durch die Markierungen M2 und M3 definierten besonderen Messpunkten. Diese Abstände zwischen den besonderen Messpunkten können zum Beispiel auf einfache Weise mit Hilfe eines für den Einsatz im Dentalbereich geeigneten Messschiebers ermittelt werden.

Der jeweils ermittelte Abstandswert kann dann für die Berechnung der Geometriedaten bereitgestellt werden, indem er beispielsweise über eine mit der Datenverarbeitungsvorrichtung verbundene Mensch-Maschine-Schnittstelle zur Dateneingabe, etwa eine Tastatur und/oder eine Computermaus, eingegeben wird. Hierzu können die durch die Markierungen M1, M2 und M3 definierten besonderen Messpunkte, zwischen denen die Abstandwerte a, b und c ermittelt wurden, über die mit der Datenverarbeitungseinrichtung in Verbindung stehende Mensch-Maschine-Schnittstelle zur Datenausgabe, also zum Beispiel einen Monitor, an der das von der Datenverarbeitungsvorrichtung generierte grafische Modell angezeigt wird, sowie unter zur Hilfenahme der Mensch-Maschine-Schnittstelle zur Dateneingabe ausgewählt und dann der ermittelte Abstandswert eingegeben werden.

Gemäß einer weiteren, in den Figuren 1-5 nicht separat dargestellten, jedoch zu der Ausführungsform gemäß Figur 3 ähnlichen Ausführungsform, werden die besonderen Messpunkte nicht durch Markierungen wie die Markierungen M1, M2 oder M3, sondern lediglich durch beispielsweise natürlich vorhandene markante Stellen des Kiefers oder markante Zahnstellen, insbesondere Zahnhöcker oder Zahnfissuren, definiert, die Teil des Zahn- und Kieferbereiches 100 sind. Zwischen diesen durch markante Stellen im Zahn- und Kieferbereich 100 definierten besonderen Messpunkten können ebenfalls die Abstände zum Beispiel auf einfache Weise mit Hilfe eines für den Einsatz im Dentalbereich geeigneten Messschiebers ermittelt, und die ermittelten Abstandswerte zusätzliche Daten für die Berechnung der Geometriedaten auf im Wesentlichen gleiche Weise wie zuvor beschrieben bereitgestellt werden.

Allerdings besitzen die besonderen Messpunkte, die durch Markierungen definiert sind, gegenüber den besonderen Messpunkten, die durch natürlich vorhandene markante Stellen des Kiefers oder markante Zahnstellen definiert sind, den Vorteil, dass die besonders einfach und trotzdem sehr genau über die mit der Datenverarbeitungseinrichtung in Verbindung stehende Mensch-Maschine-Schnittstelle zur Datenausgabe und unter zur Hilfenahme der Mensch-Maschine-Schnittstelle zur Dateneingabe auswählbar sind.

Die Datenverarbeitungsvorrichtung umfasst bevorzugt Mittel zum Anpassen der berechneten Geometriedaten sowie bevorzugt Mittel zum Anpassen des generierten grafischen Modells unter Berücksichtigung der als zusätzliche Daten eingegebenen Abstandswerten, die zwischen den jeweiligen besonderen Messpunkten ermittelt wurden, sofern der sich aus den berechneten Geometriedaten ergebende Abstandswert zwischen den zwei ausgewählten besonderen Messpunkten von dem eingegebenen Abstandswert unterscheidet.

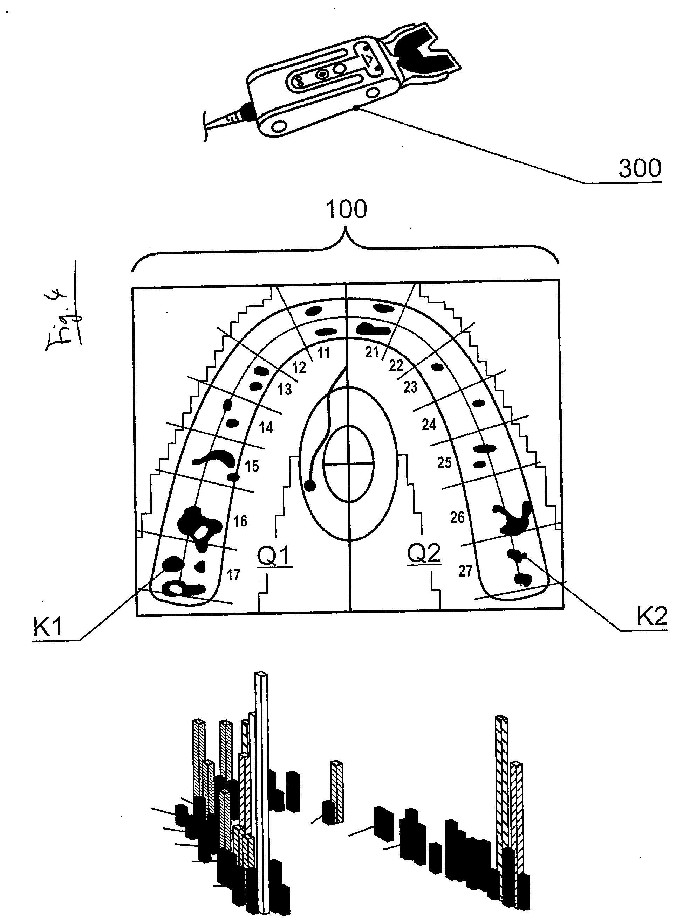

Die Figur 4 zeigt in drei Darstellungen zu oberst ein an sich bereits bekanntes Gerät 300 zur elektronischen Bissanalyse, darunter einen mit einem solchen Gerät 300 elektronisch erfassten und ausgewerteten Gebissabdruck mit den jeweiligen Bisskontaktpunkten, sowie zu unterst die an den jeweiligen Bisskontaktpunkten wirkenden Kräfte.

Gemäß einer weiteren Ausführungsform handelt es sich bei dem wenigstens einen zusätzlichen Datum um zwei Koordinatendaten für die zwei besonderen Messpunkte, welche, wie in Figur 4 zu sehen, durch die Bisskontaktpunkte K1 und K2 von Zahnstellen definiert sind, die Teil des Zahn- und Kieferbereich 100 sind. Solche Bisskontaktpunkte treten in der Regel an natürlich vorhandenen markanten Stellen des Kiefers oder markanten Zahnstellen, insbesondere Zahnhöckern, auf, die Teil des wenigstens einen Zahn- und/oder Kieferbereiches sind.

Als Auswahlkriterium für wenigstens einen bestimmten Bisskontaktpunkt kann dienen, dass es sich um einen sogenannten Frühkontaktpunkt handelt.

Mit einem Gerät zur elektronischen Bissanalyse wie dem Gerät 300 lassen sich Gebissabdrücke elektronisch erfassen und auswerten, so dass mit einem solchen Gerät die Koordinatendaten für die durch die Bisskontaktpunkte K1 und K2 definierten besonderen Messpunkte auf einfache Weise ermitteln lassen. Die zwei Bisskontaktpunkte K1 und K2 liegen auf den Backenzähnen 17 und 27, wobei der Backenzahn 17 sich im ersten Quadranten Q1 und der Backenzahn 27 sich im zweiten Quadranten Q2 befindet.

Die ermittelten Koordinatendaten für die durch die Bisskontaktpunkte K1 und K2 definierten besonderen Messpunkte können dann als zusätzlich Daten für die Berechnung der Geometriedaten bereitgestellt werden, indem sie beispielsweise über eine mit der Datenverarbeitungsvorrichtung verbundene Mensch-Maschine-Schnittstelle zur Dateneingabe, insbesondere eine Tastatur und/oder eine Computermaus, eingegeben werden. Hierzu kann zweckmäßiger Weise der jeweilige besondere Messpunkt, zudem Koordinatendaten ermittelt wurden, über die Mensch-Maschine-Schnittstelle zur Datenausgabe, insbesondere einen Monitor, an der das von der Datenverarbeitungsvorrichtung generierte grafische Modell angezeigt wird, und über eine mit der Datenverarbeitungseinrichtung verbundene Mensch-Maschine-Schnittstelle zur Dateneingabe, insbesondere eine Tastatur und/oder Computermaus, ausgewählt und dann die zu diesem besonderen Messpunkt zusätzlich ermittelten Koordinatendaten eingegeben werden.

Die Datenverarbeitungsvorrichtung umfasst bevorzugt Mittel zum Anpassen der berechneten Geometriedaten sowie bevorzugt Mittel zum Anpassen des generierten grafischen Modells unter Berücksichtigung der als zusätzliche Daten eingegebenen Koordinatendaten eines ausgewählten besonderen Messpunktes, sofern die sich aus den berechneten Geometriedaten ergebenden Koordinatendaten für den ausgewählten besonderen Messpunkt von den zusätzlich eingegebenen Koordinatendaten unterscheiden.

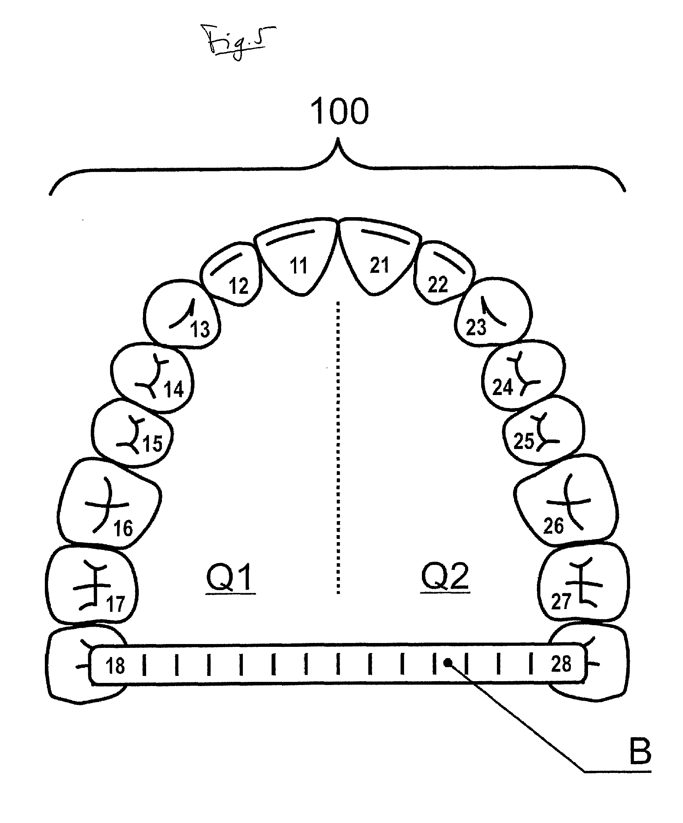

Die Figur 5 zeigt beispielhaft einen einen kompletten Zahnbogen umfassenden Zahn- und Kieferbereich 100. Bei dem dargestellten Zahnbogen handelt es sich wiederum um den eines Oberkiefers, so dass in der Figur links der gepunkteten Linie der erste Quadrant Q1 und rechts der gepunkteten Linie der zweite Quadrant Q2 zu sehen ist. Gemäß einer weiteren Ausführungsform handelt es sich bei dem wenigstens einen zusätzlichen Datum um eine Anzahl von Koordinatendaten für eine entsprechende Anzahl besonderer Messpunkte, die, wie in Figur 5 zu sehen ist, durch ein im Wesentlichen festes, streifenförmiges Materialstück B definiert sind, das zwei voneinander beabstandete Stellen des Zahn- und Kieferbereichs 100 verbindet, indem es lösbar aber verrutschungssicher auf diese Stellen aufgebracht ist. Die zwei voneinander beabstandeten jedoch durch das Materialstück B verbundenen Stellen liegen auf den hinteren Backenzähne 18 und 28, von denen der Backenzahn 18 sich im ersten Quadranten Q1 und er Backenzahn 28 sich im zweiten Quadranten Q2 befindet.

Es versteht sich, dass ein solches Materialstück B während des Schrittes des optischen Erfassens des Zahn- und Kieferbereiches 100 ebenfalls mit einer Anzahl von Einzelaufnahmen optisch erfasst wird, so dass für die durch das Materialstück B definierten besonderen Messpunkte während des Schrittes des Berechnens von Koordinatendaten ebenfalls Koordinatendaten berechnet werden.

Da durch das aufgebrachte Materialstück B jedoch die darunterliegenden Zahnstellen und teils auch Kieferstellen verdeckt werden, werden zweckmäßiger Weise ebendiese Zahn- und Kieferstellen auch vor dem Aufbringen oder nach dem Entfernen des Materialstücks B mit einer Anzahl von Einzelaufnahmen erfasst. Dadurch kann gewährleistet werden, dass auch Koordinaten sowie Geometriedaten des Zahn- und Kieferbereichs 100 berechenbar sind, aus denen diese Stellen im unverdeckten Zustand, also ohne eines der aufgebrachten Materialstücke, erkennbar sind.

Durch dieses überbrückende, streifenförmige Materialstück B kann der ansonsten zur Rachenseite hin offener Zahnbogen des Zahn- und Kieferbereichs 100 hilfsweise gewissermaßen zu einem Kreis geschlossen werden, was während des Schrittes des Berechnens der Geometriedaten für diesen Zahn- und Kieferbereich 100 das Zusammenführen der erfassten Einzelaufnahmen bzw. der berechneten Koordinatendaten erheblich erleichtert, da für den ansonsten freien und somit im Wesentlichen undefinierten Bereich zwischen den hinteren Backenzähnen 18 und 28 nunmehr eine Anzahl zusätzlicher Koordinatendaten bereitsteht.

Zusätzlich erleichtert wird das Zusammenführen der erfassten Einzelaufnahmen bzw. der berechneten Koordinatendaten, wenn sich auf dem Materialstück B zwischen dessen Enden eine Anzahl von Markierungen befindet, was in Figur 5 durch Striche auf dem Materialstück B angedeutet ist, die jeweils weitere besonderen Messpunkte definieren. Besonders bevorzugt bestehen zwischen den einzelnen Markierungen auf dem Materialstück B bestimmte, insbesondere gleichmäßige, Abstände, so dass auf einfache Weise überprüfbar ist, ob die Einzelaufnahmen, mit denen das Materialstück B erfasst wurde, bzw. die für die Einzelaufnahmen berechneten Koordinatendaten korrekt zusammengeführt wurden.

## Patentansprüche

1. Verfahren zum Bereitstellen von Geometriedaten wenigstens eines Zahn- und/oder Kieferbereiches, umfassend die Schritte:
- Optisches Erfassen des wenigstens einen Zahn- und/oder Kieferbereiches mit wenigstens zwei Einzelaufnahmen aus wenigstens zwei unterschiedlichen Blickwinkeln;
- Berechnen einer Anzahl von Koordinatendaten für eine entsprechende Anzahl von Messpunkten einer jeweiligen Einzelaufnahme;
- Berechnen von Geometriedaten für den wenigstens einen Zahn- und/oder Kieferbereich unter Berücksichtigung der für die Einzelaufnahmen berechneten Koordinatendaten sowie wenigstens eines zusätzlichen, hinsichtlich des wenigstens einen Zahn- und/oder Kieferbereiches erfassten oder bereitgestellten Datums.

2. Verfahren nach Anspruch 1, wobei es sich bei dem wenigstens einen zusätzlichen Datum um eine Anzahl von Koordinatendaten für eine entsprechende Anzahl von besonderen Messpunkten handelt, die durch wenigstens ein im Wesentlichen festes, streifenförmiges Materialstück definiert sind, das zwei voneinander beabstandete Stellen des wenigstens einen Zahn- und/oder Kieferbereiches verbindet, indem es lösbar, jedoch verrutschungssicher auf diese Stellen aufgebracht ist und den Abstand zwischen diesen Stellen überbrückt.

3. Verfahren nach Anspruch 1, wobei es sich bei dem wenigstens einen zusätzlichen Datum um eine Anzahl von Koordinatendaten für eine entsprechende Anzahl von besonderen Messpunkten handelt, die durch wenigstens zwei Markierungen definiert sind, die auf wenigstens zwei voneinander beabstandeten Stellen des wenigstens einen Zahn- und/oder Kieferbereiches lösbar, jedoch verrutschungssicher aufgebracht sind.

4. Verfahren nach Anspruch 3, wobei es sich bei dem wenigstens einen zusätzlichen Datum ferner um den Abstand zwischen den besonderen Messpunkten handelt, die durch die wenigstens zwei Markierungen definiert sind.

5. Verfahren nach Anspruch 1, wobei es sich bei dem wenigstens einen zusätzlichen Datum um den Abstand zwischen wenigstens zwei besonderen Messpunkten handelt, die durch markante Stellen des Kiefers oder markante Zahnstellen, insbesondere Zahnhöcker oder Zahnfissuren, definiert sind, die Teil des wenigstens einen Zahn- und/oder Kieferbereiches sind.

6. Verfahren nach Anspruch 1, wobei es sich bei dem wenigstens einen zusätzlichen Datum um eine Anzahl von Koordinatendaten für eine entsprechende Anzahl von besonderen Messpunkten handelt, die durch wenigstens einen Bisskontaktpunkt von Stellen, insbesondere Zahnstellen definiert sind, die Teil des wenigstens einen Zahn- und/oder Kieferbereiches sind.

7. Verfahren nach Anspruch 6, wobei die Anzahl von Koordinatendaten mittels eines elektronisch erfassten und ausgewerteten Gebissabdrucks ermittelt werden.

8. Verfahren nach Anspruch 6 oder 7, wobei die Bisskontaktpunkte Frühkontaktpunkte sind.

9. Verfahren nach einem der Ansprüche 1 bis 8, wobei der Schritt des optischen Erfassens des wenigstens einen Zahn- und/oder Kieferbereiches intraoral und/oder extraoral durchgeführt wird.

10. Verfahren nach einem der Ansprüche 1 bis 9, wobei während des Schrittes des Berechnens einer Anzahl von Koordinatendaten als Koordinatendaten Koordinatentripel berechnet werden.

11. Verfahren nach einem der Ansprüche 1 bis 10, wobei während des Schrittes des Berechnens von Geometriedaten dreidimensionale Geometriedaten berechnet werden.

12. Datenverarbeitungsvorrichtung zum Bereitstellen von Geometriedaten wenigstens eines Zahn- und/oder Kieferbereiches, **dadurch gekennzeichnet, dass** sie Mittel umfasst zum Berechnen der Geometriedaten unter Berücksichtigung einer bereitgestellten Anzahl von Koordinatendaten dieses wenigstens eines Zahn- und/oder Kieferbereiches sowie wenigstens eines hinsichtlich des wenigstens einen Zahn- und/oder Kieferbereiches zusätzlich bereitgestellten Datums.

13. Datenverarbeitungsvorrichtung nach Anspruch 12, **dadurch gekennzeichnet, dass** sie Mittel umfasst zum Berechnen einer Anzahl von Koordinatendaten für eine entsprechende Anzahl von Messpunkten einer jeweiligen von wenigstens zwei bereitgestellten Einzelaufnahmen, mit denen der Zahn- und/oder Kieferbereich aus wenigstens zwei unterschiedlichen Blickwinkeln erfasst wurde.
